# EUROPÄISCHE PATENTSCHRIFT

(11) **EP 2 153 507 B1**
(45) Veröffentlichungstag und Bekanntmachung des Hinweises auf die Patenterteilung: **13.11.2013**
(21) Anmeldenummer: 08756808.5
(22) Anmeldetag: 06.06.2008
(51) Int. Cl.: H02K 7/00, H02K 5/173, H02K 7/08, H02K 7/18, F02B 63/04

(54) **AUS EINER VERBRENNUNGSKRAFTMASCHINE UND EINEM GENERATOR BESTEHENDES STROMERZEUGUNGSAGGREGAT**
POWER GENERATION UNIT CONSISTING OF AN INTERNAL COMBUSTION ENGINE AND A GENERATOR
GROUPE ÉLECTROGÈNE COMPOSÉ D'UN MOTEUR À COMBUSTION INTERNE ET D'UN GÉNÉRATEUR

(30) Priorität: 06.06.2007 AT 35907 U
(43) Veröffentlichungstag der Anmeldung: 17.02.2010
(73) Patentinhaber: Steyr Motors Gmbh, 4407 Steyr (AT)
(72) Erfinder: ASCHABER, Michael, A-4421 Aschach (AT); POXHOFER, Markus, A-3362 Mauer-Öhling (AT); LEIMINGER, Anton, A-3361 Aschbach (AT)
(74) Vertreter: Kovac, Werner
(86) Internationale Anmeldenummer: PCT/AT2008/000198
(87) Internationale Veröffentlichungsnummer: WO 2008/148142

(56) Entgegenhaltungen:
- EP-A- 0 984 548
- EP-A- 1 775 824
- JP-A- 57 000 329
- US-B1- 6 617 747

## Beschreibung

Die Erfindung betrifft ein Stromerzeugungsaggregat, bestehend aus einer Kolbenkraftmaschine und einem Generator, wobei die Kolbenkraftmaschine eine in einem Motorgehäuse gelagerte Kurbelwelle aufweist und der Generator aus einem mit dem Motorgehäuse verbundenen Generatorgehäuse, einem Stator und einem mit der Kurbelwelle drehfest verbundenen Rotor besteht. Die Stromerzeugungseinheit kann ein ortsfestes Notstromaggregat oder ein Antriebaggregat für ein Fahrzeug mit Antrieb, insbesondere Einzelradantrieb, durch von dem Generator gespeiste Elektromotoren sein.

Bei solchen Aggregaten wird die gesamte Leistung der Kolbenkraftmaschine in einer elektrischen Maschine umgesetzt. Die Ausmaße des Generators und die Masse des Rotors sind daher erheblich. Ersteres erhöht das Gewicht und den Bedarf an Bauraum des gesamten Aggregates. Letzteres kann dynamische Wechselwirkungen zwischen dem Rotor und der Kurbelwelle verursachen, die bis zum Bruch der Kurbelwelle führen können. Deshalb und wegen des für einen guten Wirkungsgrad des Generators erwünschten minimalen Spaltes zwischen Rotor und Stator ist eine zusätzliche Lagerung nötig.

### Stand der Technik

Aus der DE 44 04 791 C1 ist ein gattungsgemäßes Aggregat bekannt. Der Generator besteht dort aus einem Topfrotor und innerhalb dessen angeordneten Statorwindungen. Der Rotor hat eine eigene zentrale Nabe, die ohne Verbindung mit der Kurbelwelle in der der Kolbenkraftmaschine abgewandten Seite des Generatorgehäuses gelagert und zur Kurbelwelle mittels eines Zapfens zentriert ist. Zur Antriebsverbindung mit der Kurbelwelle ist eine Platte vorgesehen, die in radialer und in Umfangsrichtung steif und in Richtung der Drehachse und bei Winkelverlagerung der Drehachse flexibel ist. Die schwingungsentkoppelnde Wirkung der Platte ist sehr begrenzt und wird durch den Zentrierzapfen weiter vermindert. Dieser Zapfen scheint aber notwendig, weil die Toleranzkette von der Kurbelwelle über die beiden Gehäuse bis zu dem Lager an der von der Kolbenkraftmaschine abgewandten Seite des Generatorgehäuses sehr lang ist.

Aus der WO 2006/121045 A1 ist ein Aggregat bekannt, bei dem nur ein Teil der Motorleistung zum Generator abgezweigt ist. Zwischen dem Ende der Kurbelwelle und einer Abtriebswelle ist ein Wellenstummel vorgesehen, auf dem der Rotor des Generators sitzt. Die drehfeste Verbindung ist nur über Kerbverzahnungen hergestellt und der Rotor ist auf seiner der Kolbenkraftmaschine abgewandten Seite im Generatorgehäuse gelagert. Diese Konstruktion krankt an dem oben angesprochenen Toleranzproblem und ist überdies für ein Aggregat ohne die gelagerte Abtriebswelle nicht geeignet.

Aus der EP 1 775 824 A2 ist ein mit einem Getriebe verbundener Generator eines Flugtriebwerkes bekannt, dessen Rotorwelle in einer im Getriebeflansch sitzenden Zylinderrollenlager gelagert ist und dessen Rotor am von diesem entfernten Ende an der Rotorwelle befestigt ist. Die weitere Lagerung der Rotorwelle ist nicht erkennbar.

Aus der US 6,617,747 B 1 schließlich sind kleine elektrische Maschinen bekannt, deren Rotor in zwei voneinander entfernten Lagern gelagerter seichter Topf oder eine Scheibe mit Ausformungen ist.

### Aufgabe / Lösung

Es ist somit die der Erfindung zugrunde liegende Aufgabe, ein Aggregat zu schaffen, das bei möglichst geringem Raumbedarf die präzise Führung eines für die gesamte Motorleistung ausgelegten Rotors gestattet und keine erhöhte Belastung der Kurbelwelle mit sich bringt. Darüber hinaus soll der Generator einfach mit einer Kolbenkraftmaschine verbindbar sein, wie sie für konventionelle mechanische Antriebe zum Einsatz kommt.

Erfindungsgemäß wird das mit den kennzeichnenden Merkmalen des 1. Anspruches erreicht.

Der Wellenstummel bildet eine starre Verlängerung der Kurbelwelle, welche in dem in der Stirnplatte vorgesehenen Lager eine weitere Unterstützung erfährt und so gegen Biegeschwingungen zusätzlich versteift ist. Das Lager in der Stirnplatte des Generatorgehäuses wirkt also auf die Kurbelwelle zurück. Weil die Stirnplatte an der Motorseite des Generatorgehäuses ist, ist die Toleranzkette und der Weg für die Zufuhr von Schmieröl zum Lager kurz. Das Lager ist gleichzeitig das einzige Lager des Rotors, der über den Wellenstummel starr mit der Kurbelwelle verbunden ist. Auf diese Weise ist eine auch für einen Rotor erheblicher Masse ausreichend steife Konstruktion geschaffen. So erübrigt sich ein zweites Lager auf der der Kolbenkraftmaschine abgewandten Seite des Rotors. Dadurch baut der Generator sehr kurz und der Rotor ist von der der Kolbenkraftmaschine abgewandten Seite gut zugänglich und leicht einbaubar.

In einer bevorzugten Ausgestaltung bildet die Stirnplatte einen Zentrierflansch für die Verbindung des Generatorgehäuses mit einer Kupplungsglocke des Motorgehäuses. Das ergibt besonders kurze Kraftlinien und eine kurze Toleranzkette. Vorzugsweise ist das Lager in der Stirnplatte ein Zylinderrollenlager, dessen Entfernung von dem rotorseitigen Ende kleiner als dessen Entfernung vom kurbelwellenseitigen Ende ist. Das Zylinderrollenlager erlaubt bei hoher Tragfähigkeit eine Verschiebung des Wellenstummels in Längsrichtung als Folge von Wärmedehnungen. Die Entfernung verstärkt den auf die Kurbelwelle ausgeübten Versteifungseffekt und ermöglicht ein Minimieren des Überhanges des fliegenden Rotors.

Der fliegend angeordnete Rotor besteht aus einem Hohlzylinder und einer zentrischen Scheibe, wobei die Scheibe an der der Stirnplatte zugewandten Seite des Hohlzylinders angeordnet und der Raum im Inneren des Hohlzylinders nach der der Stirnplatte abgewandten Seite offen ist. Ein solcher Rotor bietet eine besonders große magnetisch wirksame Fläche und sein Schwerpunkt liegt nahe dem Lager in der Stirnplatte. Ein weiterer Vorteil ist der freie Raum im Inneren des Topfes, der von der der Kolbenkraftmaschine abgewanden Seite gut zugänglich ist.

### Abbildungen

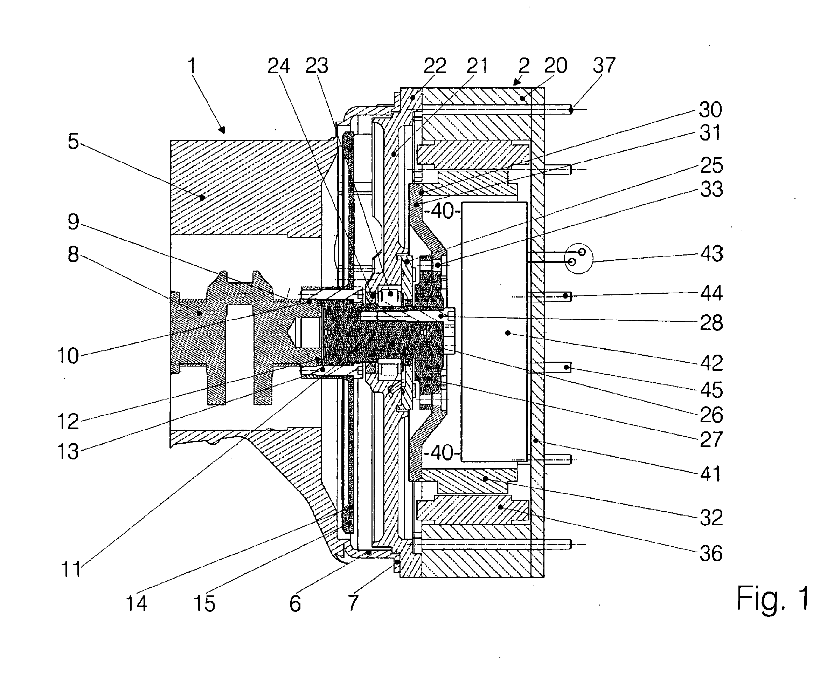

Die einzige Figur 1 zeigt einen Längsschnitt durch das erfindungsgemäße Aggregat, wobei von der Kolbenkraftmaschine nur ein Teil zu sehen ist.

### Beschreibung

Das Aggregat besteht aus einer summarisch mit 1 bezeichneten Kolbenkraftmaschine und einem Generator 2. Von der Kolbenkraftmaschine (1) ist ein Teil des Motorgehäuses 5 und der Kurbelwelle 8 zu sehen. Das Motorgehäuse 5 ist dort zu einer Kupplungsglocke 6 erweitert, die in einem Getriebeflansch 7 endet, an dem bei konventionellem Einsatz der Kolbenkraftmaschine ein Getriebe angeflanscht ist. Die Kurbelwelle 8 ist mehrfach gelagert und endet in einem auf das äußerste Lager 9 folgenden Anschlussstück 10. An diesem ist bei konventionellem Einsatz eine Kupplung angeflanscht.

Für die erfindungsgemäße Anwendung zum Antrieb des Generators 2 ist an dem Anschlussstück 10 ein Wellenstummel 11 befestigt. Er hat einen Zentrieransatz 12 und ist mittels Gewindebolzen 13 an einem Ende fest mit der Kurbelwelle verbunden. In der abgebildeten Ausführungsform ist mit Gewindebolzen 13 ein Zahnkranzträger 14 mit einem Zahnkranz 15 für den Eingriff eines Starterritzels befestigt.

Das Generatorgehäuse 20 hat an seiner der Kolbenkraftmaschine 1 zugewandten Seite eine Stirnplatte 21, welche an ihrem äußeren Rand einen mit der Kupplungsglocke 6 verschraubten Zentrierflansch 22 bildet. Die Stirnplatte trägt an ihrem inneren Rand ein Zylinderrollenlager 23 für den Wellenstummel 11. Auf dessen Motorseite ist ein Dichtring 24, auf dessen Generatorseite ein Lagerdeckel 25 mit einem Dichtring. Dieses Zylinderrollenlager 23 bildet zusammen mit dem äußeren Kurbelwellenlager 9 die Lagerung des Generators, wozu es möglichst weit vom Kurbelwellenlager 9 entfernt ist. Außerdem bewirkt das Zylinderrollenlager 23 eine Versteifung der Kurbelwelle 8.

Der Wellenstummel 11 hat an seinem der Kolbenkraftmaschine abgewandten Ende eine Stirnfläche 26, an der ein Planflansch 27 mittels der Gewindebolzen 28 starr und zentriert befestigt ist. Der Rotor 30 des Generators 2 besteht hier aus einer konkaven Scheibe 31 und einem Hohlzylinder 32. Der innere Rand der Scheibe 31 ist mit dem Planflansch 27 verschraubt (Gewindebolzen 33). Der Hohlzylinder 32 ist beispielsweise mit Permanentmagneten bestückt (nicht dargestellt). Der Rotor 30 ist ein fliegend gelagerter Topfrotor.

Wenn, wie in der abgebildeten Ausführungsform, die Statorwindungen 36 ausserhalb des Rotors im Generatorgehäuse 20 befestigt sind, bleibt im Inneren des Rotors 30 ein Freiraum 40, der einerseits von der konkaven Scheibe 31 und andererseits von einer Rückwand 41 des Gehäuses 20 begrenzt ist. Dieser Freiraum ist so groß, dass er zur Unterbringung von elektrischen/elektronischen Bauteilen, zum Beispiel der Leistungselektronik-Einheit 42 genutzt werden kann. So ist diese gut zugänglich und raumökonomisch untergebracht. Die elektrischen Verbindungen zwischen der Leistungselektronikeinheit 42 und den Statorwindungen 36 ist nicht dargestellt; nur die Anschlussbuchsen 43 für die Abgabe des elektrischen Stromes an den/die Verbraucher ist angedeutet.

Weiters sind Rohrstutzen 44,45 für die Zufuhr und Abfuhr eines flüssigen Kühlmediums angedeutet. Das erlaubt eine höhere Energiedichte und damit einen verringerten Raumbedarf des Generators. Dadurch ist die erfindungsgemäße Konstruktion auch für Aggregate großer Leistung für den Antrieb sehr großer und schwerer Fahrzeuge geeignet.

## Patentansprüche

1. Stromerzeugungseinheit, bestehend aus einer Kolbenkraftmaschine (1) und einem Generator (2), wobei die Kolbenkraftmaschine eine in einem Motorgehäuse (5) gelagerte Kurbelwelle (8) und der Generator ein mit dem Motorgehäuse (5) verbundenes Generatorgehäuse (20), einen Stator mit Statorwindungen (36) und einen mit der Kurbelwelle (8) drehfest verbundenen Rotor (30) aufweist, **dadurch gekennzeichnet, dass**
a) ein konzentrischer Wellenstummel (11) an seinem einen Ende mit der Kurbelwelle(8) und mit seinem anderen Ende mit dem Rotor (30) fest verbunden ist,
b) das Generatorgehäuse (20) an seiner der Kolbenkraftmaschine (1) zugewandten Seite eine Stirnplatte (21) aufweist, die ein Lager (23) für den Wellenstummel (11) aufnimmt, sodass der Wellenstummel zwischen seinen beiden Enden gelagert ist, und
c) der fliegend angeordnete Rotor (30) ein aus einem Hohlzylinder (32) und einer zentrischen Scheibe (31) bestehender Topfrotor ist, wobei die Scheibe (31) an der der Stirnplatte (21) zugewandten Seite des Hohlzylinders (32) angeordnet und ein Freiraum (40) im Inneren des Hohlzylinders (32) nach der der Stirnplatte (21) abgewandten Seite hin offen ist,
d) das Lager für den Wellenstummel (11) ein Zylinderrollenlager (23) ist, dessen Entfernung von dem rotorseitigen Ende des Wellenstummels (11) kleiner als dessen Entfernung von dessen kurbelwellenseitigem Ende (12) ist.

2. Stromerzeugungseinheit nach Anspruch 1, **dadurch gekennzeichnet, dass** die am Generatorgehäuse (20) befestigte Stirnplatte (21) einen Zentrierflansch (22) für die Verbindung des Generatorgehäuses (20) mit einem Teil des Motorgehäuses (5), einer Kupplungsglocke (6) bildet und das kurbelwellenseitige Ende (12) des Wellenstummels einen Zentrieransatz bildet.

## Claims

1. Power generating unit comprising a piston engine (1) and a generator (2), the piston engine (1) having a crankshaft (8) journalled in a crankcase (5), the generator comprising a generator casing (20) joined to the crankcase (5), a stator with stator windings (36) and a rotor (30) coupled to the crankshaft (8), **characterized in that**
a) A concentric stub shaft (11) is rigidly connected to the crankshaft (8) with its one end, and to the rotor (30) with its other end,
b) the generator casing (20) has a front plate (21) on its side near the piston engine (1) which houses a bearing (23) for journalling the stub shaft (11), whereby the stub shaft is journalled between its ends (12,26),
c) the cup-shaped rotor (30) is of the overhung type and consists of a hollow cylinder (32) and of a centric disc (31), the disc being arranged on the side of the hollow cylinder (32) adjacent the front plate (21) and a free space (40) is inside the hollow cylinder (32) is open to the side remote from the front plate (21), and
d) The bearing (23) of the stub shaft (11) is a roller bearing, whose distance from the end of the stub shaft (11) on the side of the rotor is smaller than its distance from the end (12) of the stub shaft (11) on the side of the crankshaft (8).

2. Power generating unit according to claim 1, **characterized in that** the front plate (21) attached to the generator housing (20) has a centering flange (22) for joining the generator casing (20) to a part of the crankcase (5), a coupling bell (6), and that the end of the stub shaft (11) on the side of the crankshaft (8) has a centering offset (12).

## Revendications

1. Ensemble générateur comprenant un moteur à pistons (1) et un générateur (2), le vilebrequin (8) du moteur à pistons (1) tournant sur paliers dans un carter (5), le générateur comprenant un boitier (20) raccordé au carter (5), un stator muni de spires (36) et un rotor (30) accouplé au vilebrequin (8), **caracterisé en ce que**
a) Un moignon d'arbre concentrique (11) est accouplé rigidement au vilebrequin (8) d'une extrémité, et au rotor (30) de l'autre extrémité,
b) Le boitier (20) du générateur est muni d'une paroi d'about (21) du coté du moteur a pistons (1), laquelle paroi comporte un palier (23) pour le moignon d'arbre (11), ainsi supportant le moignon d'arbre (11) entre ses extrémités (12,26),
c) Le rotor (30) à pot est en porte à faux et composé d'un cylindre creux (32) et d'un disque concentrique (31), le disque (31) étant disposé du coté du cylindre creux (32) adjacent à la paroi d'about (21), et un éspace libre (40) à l'intérieur du cylindre creux (32) est ouvert vers le coté opposé à la paroi d'about (21), et
d) Le palier (23) du moignon d'arbre (11) est un palier à rouleaux, dont la distance de l'extrémité du moignon d'arbre (11) coté du rotor est inférieur à sa distance du but (12) du moignon d'arbre (11) coté du vilebrequin (8).

2. Ensemble générateur selon la revendication 1, **caracterisé en ce que** la paroi d'about (21) rattachée au boitier (20) du générateur est pourvue d'une bride de centrage (22) destiné à raccorder le boitier (20) du générateur a une partie du carter (5), une cloche d'embrayage (6), et **en ce que** l'extrémité du moignon d'arbre (11) du coté du vilebrequin (8) est pourvue d'un épaulement de centrage (12).
